(19) **Europäisches Patentamt European Patent Office Office européen des brevets**

(11) **EP 4 664 062 A1**

(12) **EUROPEAN PATENT APPLICATION**
published in accordance with Art. 153(4) EPC

(43) Date of publication:
**17.12.2025 Bulletin 2025/51**

(21) Application number: **23927633.0**

(22) Date of filing: **22.12.2023**

(51) International Patent Classification (IPC):
***G01B 11/24*** *(2006.01)*

(52) Cooperative Patent Classification (CPC):
**G01B 11/24**

(86) International application number:
**PCT/JP2023/046079**

(87) International publication number:
**WO 2024/190031 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023 JP 2023037229**

(71) Applicant: **JFE Steel Corporation Tokyo 100-0011 (JP)**

(72) Inventors:
• **ONO, Hiroaki Tokyo 100-0011 (JP)**
• **AKAZAWA, Takahiro Tokyo 100-0011 (JP)**
• **GOTO, Hiroto Tokyo 100-0011 (JP)**
• **UKIDA, Takafumi Tokyo 100-0011 (JP)**

(74) Representative: **Haseltine Lake Kempner LLP Bürkleinstrasse 10 80538 München (DE)**

(54) **METHOD FOR MEASURING SHAPE OF BELT-LIKE OBJECT, METHOD FOR CONTROLLING SHAPE OF BELT-LIKE OBJECT, METHOD FOR MANUFACTURING BELT-LIKE OBJECT, METHOD FOR CONTROLLING QUALITY OF BELT-LIKE OBJECT, DEVICE FOR MEASURING SHAPE OF BELT-LIKE OBJECT, AND EQUIPMENT FOR MANUFACTURING BELT-LIKE OBJECT**

(57) A band-like object shape measuring method for measuring a shape of a band-like object includes a capturing step of capturing an image of thermal radiation light of the band-like object such that an angle θ formed by a plane α, which is a reference plane of a surface of the band-like object, and an optical axis of a camera does not become 90 degrees, and an angle φ formed by ortho- graphic projection of the optical axis of the camera onto the plane α and a conveying direction p of the band-like object does not become 0 degrees, and an image processing step of calculating an index of a shape of an edge portion of the band-like object by calculating a contour profile of the band-like object from the image obtained.

FIG.1

**Description**

Field

The present invention relates to a band-like object shape measuring method, a band-like object shape control method, a band-like object manufacturing method, a band-like object quality management method, a band-like object shape measuring apparatus, and band-like object manufacturing equipment.

Background

In the material industry, shape management of band-like materials is important, and quantification of product shapes has been required. For example, a shape measurement of steel materials in a steel process is highly demanded from the viewpoint of operation stability, product quality assurance, and the like. In particular, the shape measurement during rolling for producing a product with a target shape is important because it leads to improvement in product quality and operation stabilization by initial setting of rolling conditions and feedback for rolling control during rolling.

For example, in a manufacturing line of hot-rolled steel sheets, a rectangular parallelepiped semi-product called a slab in a high temperature state extracted from a heating furnace is processed into a sheet shape through the steps of sizing mill, rough rolling, and finish rolling, and coiled to be a coil as a product. At this time, depending on the rolling state, the rolling reduction may become uneven and the steel sheet may partially extend in a width direction, resulting in a shape defect.

For example, as compared with a central portion (central portion in the width direction) of the steel sheet, when only edge portions (end portions in the width direction) are extended, the edge portions will have a wavy shape. On the other hand, when only the central portion is extended, the central portion will have a wavy shape. The above shape defect not only causes a defect as a product but also deteriorates a sheet passability in next processes such as pickling and cold rolling, causing a problem. Therefore, it is highly required to avoid the shape defect.

In order to improve the shape defect, it is necessary to appropriately set a load in the width direction at the time of rolling, but there are various disturbances such as wear of a rolling roll, temperature distribution of the steel sheet, and variation in material characteristic distribution. It is extremely difficult to obtain optimum rolling conditions only by calculation. Therefore, in order to set the optimal rolling conditions, it is essential to perform preset control by matching a steel sheet shape measurement with a rolling model to derive an optimal initial setting, perform feedback control of the rolling conditions in real time, and the like. By performing the above controls, the shape defect can be finally suppressed.

However, it is difficult to measure the shape of the steel sheet after the steel sheet is formed into a roll-shaped product. In particular, it is necessary to measure the shape during rolling in the feedback control. Therefore, the shape is preferably measured immediately after an exit of finish rolling that is the final rolling process. For example, when elongation of one of the edge portions is significant with respect to the central portion of the steel sheet, a load balance in the width direction of the rolling roll is adjusted to perform a leveling control to eliminate deviation of the elongation to one of the edge portions. The shape described herein refers to sheet elongation in a longitudinal direction that is locally generated in the width direction of the steel sheet mainly at the time of rolling the steel sheet, and specifically includes "elongation at the central portion" and "elongation at the edge portions".

As a technique for measuring the shape of the steel sheet immediately after the exit of finish rolling, various techniques such as a method using a rod-like light source or a magnetic sensor have been proposed in the past. As a particularly effective method among the above techniques, for example, Patent Literatures 1 to 3 disclose a method for measuring a shape by irradiating a target surface with a point-like or linear light beam using a laser and measuring reflected light thereof.

Further, Patent Literature 4 discloses a technique of using three line lasers whose longitudinal direction is orthogonal to the conveying direction of the steel sheet with respect to a laser irradiation system. In the technique disclosed in Patent Literature 4, a line laser is irradiated in parallel to the longitudinal direction of the steel sheet so as to form three lines at equal intervals, and reflection images thereof are acquired to compare profiles of respective lasers, thereby removing an influence of vertical vibration of the steel sheet.

In addition, Patent Literatures 5 to 7 and Non Patent Literature 1 disclose a technique of increasing the number of lines irradiated at a lower cost than a laser by irradiating a target surface with a stripe pattern including a plurality of lines using a strong LED light source, thereby stably measuring the shape regardless of a mirror surface property or inclination of the target.

A demand for the shape measurement of a steel sheet during manufacturing exists not only in a hot-rolled steel sheet but also in other band-like materials regardless of a red-heated state (e.g., 600°C or higher), a warm state (e.g., 300°C to 600°C), and a cold state (e.g., around normal temperature). The term "band-like object" as used herein refers to a long material. Examples of the band-like object include products that are formed into a rectangular sheet, plate, board, plank, and slab, such as a steel plate in addition to products finally coiled such as iron, paper, cloth, or nonferrous metal such as aluminum.

Citation List

Patent Literature

Patent Literature 1: JP S56-124006 A
Patent Literature 2: JP S55-40924 A
Patent Literature 3: JP S58-11708 A
Patent Literature 4: JP S61-40503 A
Patent Literature 5: JP 2008-58036 A
Patent Literature 6: JP 2011-99821 A
Patent Literature 7: JP 2016-65863 A

Non Patent Literature

Non Patent Literature 1: Isei and three other persons, "Development of shape meter employing LED dot pattern projection method for hot strip finishing mill", iron and steel, The Iron and Steel Institute of Japan, 2019, Vol. 105, No. 1, p. 20 - 29
Non Patent Literature 2: Kaneshige, "Thermal measurement with radiation thermometer", molding, Japan Society of Polymer Processing, 2020, Vol. 32, No. 4, p. 121 - 124

Summary

Technical Problem

Techniques disclosed in Patent Literatures 1 to 7 are a method for measuring a shape of an object by irradiating a hot-rolled steel sheet with light using a light source and capturing reflected light with a camera. However, for example, in consideration of an influence of high temperature due to radiant heat, adhesion of steam, dust, oil, and the like to the steel sheet, an advanced technique is required for stably measuring for a long period of time in a state where the light source and the sensor are brought close to the steel sheet during conveyance. As a result, a maintenance cost will be also high.
In order to prevent this, it is conceivable to arrange the light source far from the object, but since the light is diffused and the light quantity decreases, it is difficult to design an optical system that stably condenses light in order to secure the light quantity. In addition, although there is a possibility of using a magnetic sensor or the like, it is necessary to bring the sensor itself close to a measurement target, and it is similarly difficult to install the sensor and maintain the performance.
The present invention has been made in view of the above, and an object of the present invention is to provide a band-like object shape measuring method, a band-like object shape control method, a band-like object manufacturing method, a band-like object quality management method, a band-like object shape measuring apparatus, and band-like object manufacturing equipment capable of easily and stably operating a light source or a sensor on a target that is an edge portion of a band-like object without bringing the light source or the sensor close to the target to be measured, and also suppressing a maintenance cost.

Solution to Problem

(1) To solve the problem and achieve the object, a band-like object shape measuring method according to the present invention is the method for measuring a shape of a band-like object. The band-like object shape measuring method includes: a capturing step of capturing an image of thermal radiation light of the band-like object such that an angle $\theta$ formed by a plane $\alpha$ and an optical axis of a camera does not become 90 degrees, the plane $\alpha$ being a reference plane of a surface of the band-like object, and an angle $\phi$ formed by orthographic projection of the optical axis of the camera onto the plane $\alpha$ and a conveying direction p of the band-like object does not become 0 degrees; and an image processing step of calculating an index of a shape of an edge portion of the band-like object by calculating a contour profile of the band-like object from the image obtained.
(2) Moreover, in the band-like object shape measuring method according to above (1), the image processing step may include: extracting a region of the band-like object from the image obtained; and calculating the contour profile of the band-like object by calculating a position of the edge portion in the region extracted.
(3) Moreover, in the band-like object shape measuring method according to above (1) or (2), the image processing step may include calculating, as the index, any one or more of a steepness, a wave height, a wave pitch, an elongation amount, and an elongation percentage of the edge portion of the band-like object from the contour profile of the band-like object obtained.

(4) Moreover, in the band-like object shape measuring method according to any one of above (1) to (3), the image processing step may include calculating a resolution in a wave height direction and a wave pitch direction from a positional relationship between the camera and the band-like object, and converting the resolution into an actual dimension.

(5) Moreover, a method for controlling a shape of a band-like object according to the present invention includes: measuring the shape of the band-like object by the band-like object shape measuring method according to any one of above (1) to (4); and controlling the shape of the band-like object, based on a result of the measuring, to have a desired shape.

(6) Moreover, a method for manufacturing a band-like object according to the present invention includes: measuring a shape of the band-like object by the band-like object shape measuring method according to any one of above (1) to (4); and manufacturing the band-like object based on a result of the measuring.

(7) Moreover, a method for managing a quality of a band-like object according to the present invention includes: measuring a shape of the band-like object by the band-like object shape measuring method according to any one of claims above (1) to (4); and managing the quality of the band-like object based on a result of the measuring.

(8) Moreover, a band-like object shape measuring apparatus according to the present invention is the apparatus for measuring a shape of a band-like object. The band-like object shape measuring apparatus includes: image capturing unit configured to capture an image of thermal radiation light of the band-like object such that an angle $\theta$ formed by a plane $\alpha$ and an optical axis of a camera does not become 90 degrees, the plane $\alpha$ being a reference plane of a surface of the band-like object, and an angle $\phi$ formed by orthographic projection of the optical axis of the camera onto the plane $\alpha$ and a conveying direction p of the band-like object does not become 0 degrees; and image processing unit configured to calculate an index of a shape of an edge portion of the band-like object by calculating a contour profile of the band-like object from the image obtained.

(9) Moreover, band-like object manufacturing equipment according to the present invention includes the band-like object shape measuring apparatus according to above (8).

Advantageous Effects of Invention

According to a band-like object shape measuring method, a band-like object shape control method, the band-like object manufacturing method, a band-like object quality management method, a band-like object shape measuring apparatus, and band-like object manufacturing equipment according to the present invention, it is possible to easily and stably operate a light source or a sensor without bringing the light source or the sensor close to a measurement target. It is also possible to suppress a maintenance cost.

Brief Description of Drawings

FIG. 1 is a diagram illustrating a schematic configuration of a band-like object shape measuring apparatus according to an embodiment of the present invention.
FIG. 2 is a diagram illustrating an example of a positional relationship between a conveying direction of a steel sheet and a camera, in which (a) is a diagram of the positional relationship viewed obliquely, (b) is a diagram of the positional relationship viewed from above, and (c) is a diagram of the positional relationship viewed from a direction $\delta$ in (b).
FIG. 3 is an example of the positional relationship between the conveying direction of the steel sheet and the camera, and is a diagram illustrating a case where an optical axis of the camera is arranged perpendicular to the conveying direction of the steel sheet.
FIG. 4 is an example of the positional relationship between the conveying direction of the steel sheet and the camera, and is a diagram illustrating a case where the optical axis of the camera is arranged obliquely to the conveying direction of the steel sheet.
FIG. 5 is a diagram illustrating an example of an image of the steel sheet in a normal state and a shape defect state.
FIG. 6 is a flowchart illustrating a specific process flow of an image processing step by an image processing unit of a band-like object shape measuring apparatus according to an embodiment of the present invention.
FIG. 7 is a diagram illustrating a binarization process in the image processing step of a band-like object shape measuring method according to the embodiment of the present invention.
FIG. 8 is a diagram illustrating a contour profile calculation process in the image processing step of the band-like object shape measuring method according to the embodiment of the present invention.
FIG. 9 illustrates an imaging example of waving generated on the steel sheet.

FIG. 10 illustrates an imaging example of a fixed wave generated on the steel sheet.

FIG. 11 is a diagram illustrating an example of a case where it is difficult to distinguish a steel sheet surface from a structure.

FIG. 12 is a diagram illustrating an example of a low-pass filter process performed when it is difficult to distinguish between the steel sheet surface and the structure in the band-like object shape measuring method according to the embodiment of the present invention.

FIG. 13 is an application example when the band-like object shape measuring apparatus according to the embodiment of the present invention is applied to shape acceptance determination.

FIG. 14 illustrates an application example when the band-like object shape measuring apparatus according to the embodiment of the present invention is applied to rolling feedback control.

FIG. 15 illustrates an application example when the band-like object shape measuring apparatus according to the embodiment of the present invention is applied to rolling control using machine learning.

Description of Embodiments

A band-like object shape measuring method, a band-like object shape control method, a band-like object manufacturing method, a band-like object quality management method, a band-like object shape measuring apparatus, and band-like object manufacturing equipment according to an embodiment of the present invention will be described with reference to the drawings. Note that components in the following embodiment include those that can be easily replaced by those skilled in the art or those that are substantially the same.

(Shape measuring apparatus)

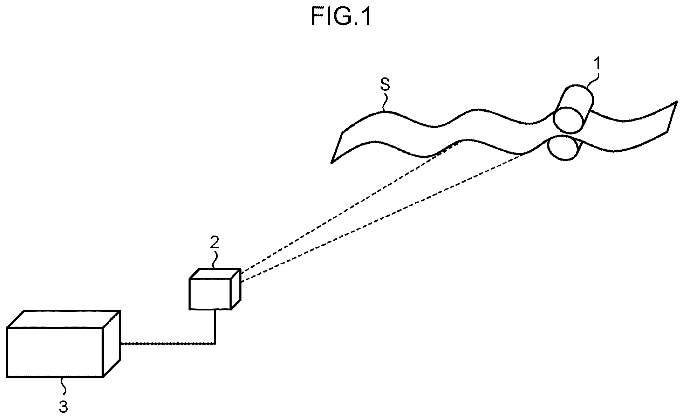

A shape measuring apparatus for band-like objects according to the embodiment will be described with reference to FIGS. 1 to 12. The shape measuring apparatus is an apparatus for measuring a shape of a band-like object. A case where the shape measuring apparatus is applied to hot finish rolling will be described below. Further, a case where the band-like object to be measured is a steel sheet will be described below. Further, a case where a shape measured by the shape measuring apparatus is elongation of an edge portion of the steel sheet will be described below.

As illustrated in FIG. 1, the shape measuring apparatus according to the embodiment includes a camera 2 and an image processing unit 3. First, details of the camera 2 will be described.

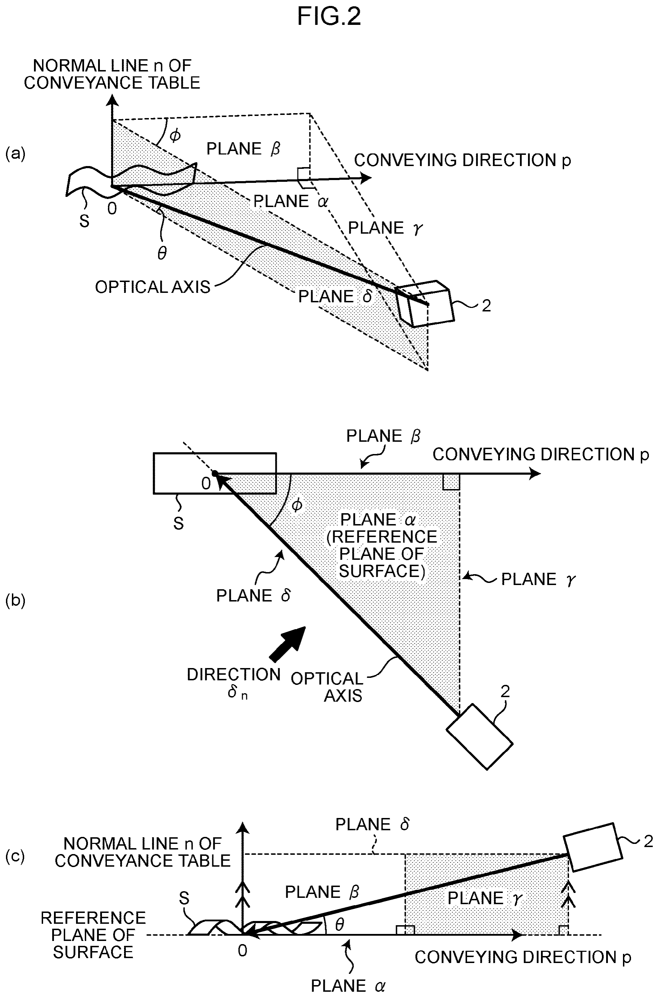

As will be described later, the camera 2 is disposed such that an angle $\theta$ formed by an "optical axis of the camera 2" and a "plane (plane $\alpha$) that is the reference plane of the band-like object (steel sheet S)" does not become 90 degrees, and also an angle $\phi$ formed by "orthographic projection of the optical axis of the camera 2 onto the plane $\alpha$" and a "conveying direction p of the band-like object (steel sheet S)" does not become 0 degrees (see FIG. 2). Using the camera 2 arranged in this manner, an image of thermal radiation light of the steel sheet S on an exit side of hot finish rolling of the steel sheet S rolled by rolling roll 1 is captured.

When a digital camera or the like sold to the general public is used as the camera 2, problems such as blurring or roughness of an image occurs, and the shape of the steel sheet S cannot be clearly captured. Therefore, technical points (1) to (4) for accurately capturing the shape of the steel sheet S by the camera 2 will be described below.

(1) Securing light quantity during imaging

Firstly, a light quantity for obtaining a clear image is secured. On the exit side of hot finish rolling, the steel sheet S may pass at a speed of, for example, 20 m/s or more, and thus the speed is very high. In order to clearly capture a high-speed object without blurring, it is preferable to shorten the exposure time. For example, when imaging is performed with a resolution of about 2 mm at 20 m/s and a pixel blurring within 1 pixel, i.e., within 2 mm, an allowable exposure time is only 0.1 ms, and a received light quantity proportional to the exposure time is also very small.

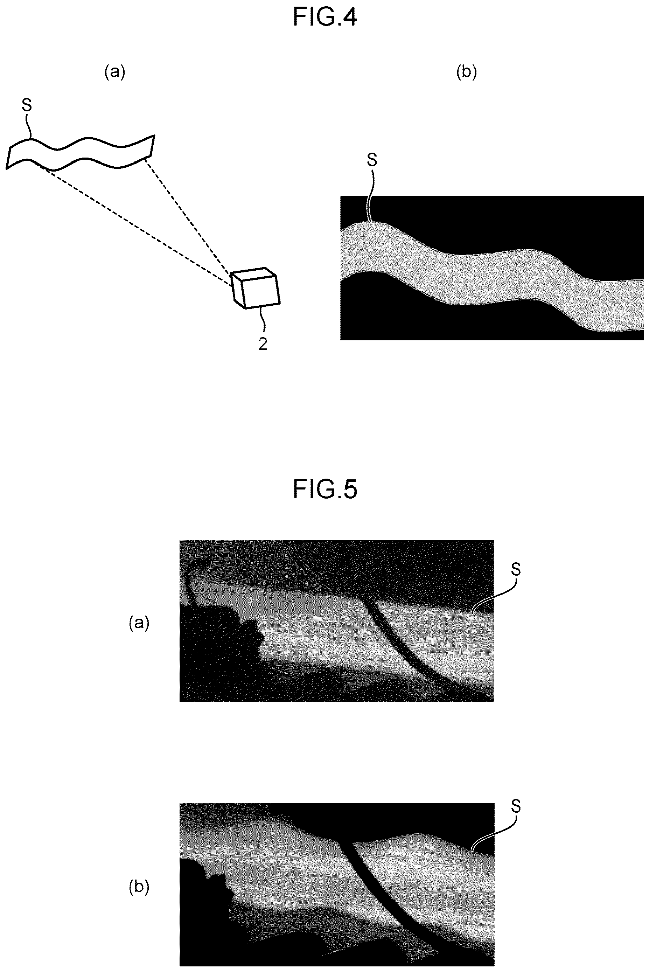

Further, a steel sheet temperature on the exit side of hot finish rolling is about 900°C. As illustrated in FIG. 5 of Non Patent Literature 2, a peak wavelength of thermal radiation light at about 900°C (1200 K) is 2.5 $\mu$m, and a sensitivity is low in a visible region (0.4 to 0.7 $\mu$m). Therefore, it is preferable to use a camera including an imaging element such as InGaAs, PbS, or PbSe as the camera 2.

On the other hand, a camera using the imaging element such as InGaAs, PbS, or PbSe is expensive. Still more, the price becomes higher according to the resolution. Thus, to capture an image with high resolution, an introduction cost increases. Therefore, as the camera 2, it is preferable to use a camera including an inexpensive Si imaging element and capable of using a near-infrared sensitivity region of 0.8 to 1.0 $\mu$m. By using such a camera 2, it is possible to obtain a sufficient thermal radiation light quantity at low cost.

Note that, when the present method is applied to an object at a lower temperature, it is preferable to use the camera 2 including an imaging element having sensitivity on the longer wavelength side. For example, when a measurement target is about 400°C, the camera 2 including an InGaAs imaging element having sensitivity to 1.2 to 1.7 μm can be used without considering the introduction cost. In addition, when the measurement target is about 200°C, the camera 2 including an imaging element such as PbS or PbSe having sensitivity to 3 to 5 μm can be used. Thus, a sufficient light quantity can be secured. In this manner, it is preferable to select the camera 2 including the imaging element having sensitivity to a suitable wavelength band according to the conveyance speed, the resolution, the temperature, a depth of field to be described later, and the like of the measurement target.

(2) Positional relationship between steel sheet and camera

Secondly, in order to clearly image the shape of the steel sheet S, a positional relationship between the steel sheet S to be measured and the camera 2 is examined. Here, it is considered to focus on edge elongation of the steel sheet S, and a change in edge shape is captured as a contour of the steel sheet S. FIG. 2 illustrates an example of a positional relationship between the conveying direction p of the steel sheet S and the camera 2. In FIG. 2, (a) is a diagram of the positional relationship viewed obliquely, (b) is a diagram of the positional relationship viewed from above, and (c) is a diagram of the positional relationship viewed from a direction $\delta_n$ in (b). Here, the direction $\delta_n$ is a direction in which the optical axis of the camera 2 can be viewed from right beside. By defining the direction $\delta_n$ in this way, a magnitude of the light receiving angle θ to be described later can be accurately viewed.

In (a), (b), and (c) of FIG. 2, the plane α is parallel to a conveyance table of the steel sheet S, and a plane β includes the conveying direction p of the steel sheet S and a normal line n of the conveyance table. Furthermore, an angle θ (light receiving angle θ) is formed by the optical axis of the camera 2 and the plane α, and an angle φ is formed by orthographic projection of the optical axis of the camera 2 onto the plane α and the conveying direction p. The plane α includes a surface of the band-like object (steel sheet S) in a state where the band-like object (steel sheet S) is stably conveyed in a substantially flat shape. Therefore, the plane α is also referred to as the reference plane of a surface of the band-like object (steel sheet S).

Still more, a direction of the normal line n of the conveyance table is the same as the normal direction of the surface of the steel sheet S in a state where the steel sheet S conveyed is stably conveyed in a substantially flat shape. Therefore, the plane α includes the conveying direction p of the band-like object (steel sheet S) and is perpendicular to the normal direction of the surface of the band-like object (steel sheet S). Still more, the plane β is also a plane including the conveying direction p of the band-like object (steel sheet S) and the normal direction of the surface of the band-like object (steel sheet S). Still more, in FIG. 2, a point 0 is an intersection of the plane α and the optical axis. Still more, a plane γ is a plane perpendicular to the conveying direction of the steel sheet. In other words, as the above-described angle φ approaches 90 degrees, the plane γ and the optical axis approach parallel.

In FIG. 2, when a resolution of the camera 2 at a position of the steel sheet S to be measured is "r (mm/pixel)", a resolution rn (mm/pixel) in a wave height direction and a resolution rp (mm/pixel) in a wave pitch direction can be expressed by Formulas (1) and (2) below. Note that the smaller the numerical value, the higher the resolution.

$$rn = r/\cos\theta \qquad\qquad\qquad (1)$$

$$rp = r/\sin\phi \qquad\qquad\qquad (2)$$

When the light receiving angle θ is close to 90 degrees, i.e., when imaging is performed in a state where the optical axis of the camera 2 is close to perpendicular to the plane α parallel to the conveyance table of the steel sheet S, the resolution rn in the wave height direction decreases, and it becomes difficult to capture a change in the contour of the edge portion. Therefore, the light receiving angle θ is preferably as close as possible to 0 degrees. Similarly, when the angle φ is close to 0 degrees, i.e., when imaging is performed in a state where the optical axis of the camera 2 is close to parallel to the conveying direction p of the steel sheet S, the resolution rp in the wave pitch direction decreases. Therefore, the angle φ is preferably as close as possible to 90 degrees. In particular, since the wave height to be measured is very small compared to the wave pitch, it is more preferable to image the steel sheet S at a low angle by reducing the light receiving angle θ as much as possible in order to accurately capture the wave height.

Still more, as illustrated in FIG. 2, by imaging the steel sheet S while looking into the steel sheet S at a low angle with respect to the light receiving angle θ, a distance between both ends of the steel sheet S in the image is reduced, and an image of both edge portions can be acquired in a smaller visual field. Further, the smaller the target visual field is, the smaller the image size is, and thus it is advantageous when high conveyance speed of the steel sheet S to be measured requires high-speed imaging or image processing.

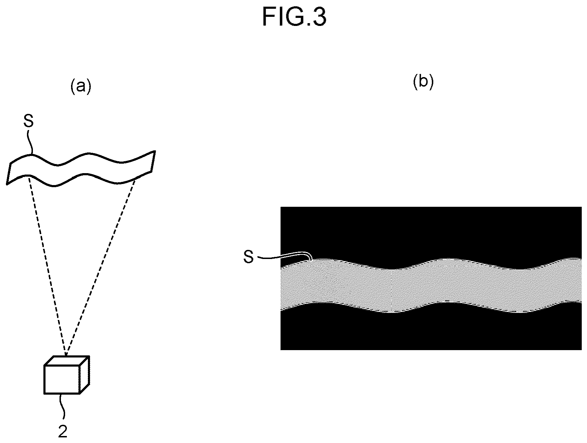

In the hot-rolled steel sheet, since the wave pitch is sufficiently large compared to the wave height, the resolution rp in the wave pitch direction may be made smaller than the resolution rn in the wave height direction. Therefore, for example, as illustrated in FIG. 3, it is preferable to set the angle φ to 90 degrees, i.e., to arrange the camera 2 perpendicular to the conveying direction of the steel sheet S and look from a lateral direction. However, when the angle $\phi$ is not extremely small, for example, as illustrated in FIG. 4, the camera 2 may be arranged obliquely with respect to the conveying direction of the steel sheet S.

(3) Distance between steel sheet and camera

Thirdly, a distance between the steel sheet S to be measured and the camera 2 is increased. This is because, by separating the camera 2 from the manufacturing line as much as possible, the camera 2 can be installed in a favorable environment, and a difference in optical conditions such as the light receiving angle $\theta$ and the angle $\phi$ in the sheet width direction, i.e., at both edge portions, of the steel sheet S can be reduced. When there is a difference in the optical conditions in the sheet width direction of the steel sheet S, this difference appears as a difference in appearance. As a result, a level of shape defect may be misjudged when the determination is made visually. A larger correction is required when the level of shape defect is quantified by image processing. In order to increase the distance, it is preferable to use a telephoto lens for imaging. By using the telephoto lens, a difference in optical conditions can be reduced.

(4) Setting appropriate diaphragm value

Fourthly, in order to secure the depth of field, a diaphragm value of the camera 2 is appropriately determined. For example, it is assumed that the entire surface of the steel sheet S is imaged across both edge portions on the front side (lower side) and the back side (upper side) of the steel sheet S. In this case, when a sheet width of the steel sheet S is d (mm), a difference $\Delta L$ (mm) between a distance from the camera 2 to the edge portion on the front side and a distance from the camera 2 to the edge portion on the back side can be expressed by Formula (3) below.

$$\Delta L = d\cos\theta/\sin\phi \qquad\qquad (3)$$

In order to acquire an image in which both edge portions of the steel sheet S are in focus, at least the depth of field (range in focus) needs to be $\Delta$Ld (mm) or more. Since the depth of field increases as the diaphragm value increases, it is preferable to set the diaphragm to $\Delta$Ld (mm) or more. However, when the diaphragm value increases, a light quantity becomes insufficient, and there is a concern that blurring may occur. Therefore, it is preferable to determine the diaphragm value and a focal length that can balance blurring and the depth of field according to the conveyance speed of the steel sheet S to be measured and the required resolution. Next, the image processing unit 3 will be described.

The image processing unit 3 is realized by, for example, a general-purpose computer such as a workstation or a personal computer. The image processing unit 3 may be installed near the camera 2, or may be installed on a cloud if high speed is unnecessary.

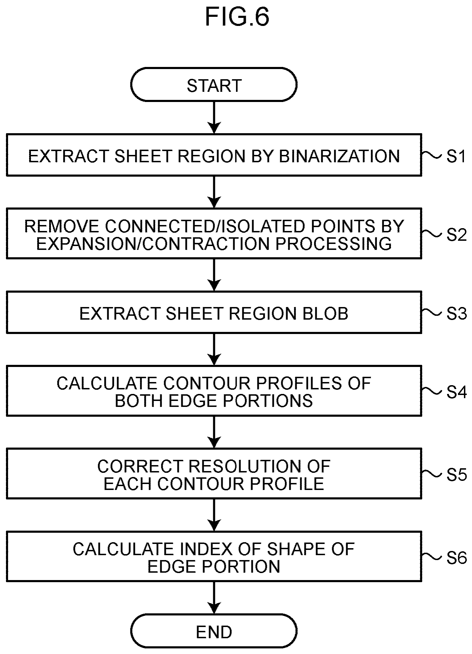

As described later, the image processing unit 3 calculates a contour profile of the steel sheet S from an image captured and obtained by the camera 2, thereby calculating an edge shape index of the steel sheet S. Still more, as described later, the image processing unit 3 extracts a region of the steel sheet S from the image (Step S1 in FIG. 6), and calculates the contour profile of the band-like object of the steel sheet S by calculating a position of the edge portion in the region extracted (Step S4 in FIG. 6). Still more, as described later, the image processing unit 3 appropriately selects any one or more of a steepness, the wave height, the wave pitch, an elongation amount, and an elongation percentage of the edge portion of the steel sheet S from the contour profile of the steel sheet S, and calculates the index thereof. Hereinafter, a process of calculating the edge shape index of the steel sheet S from the image obtained by the camera 2 using the image processing unit 3 will be described.

An image of the steel sheet S in a normal state is illustrated in (a) of FIG. 5, and an image of the steel sheet S when a shape defect occurs due to sheet elongation is illustrated in (b) of FIG. 5. As illustrated in FIG. 5, a state of sheet elongation (particularly, elongation of the edge portion of the band-like object) can be visually determined. The image processing unit 3 calculates the index of the edge portion of the steel sheet S from the image of the steel sheet S acquired by, for example, a procedure illustrated in FIG. 6. In the following description, with respect to a vertical axis and a horizontal axis of the image, an axis closer to parallel with the conveying direction of the steel sheet S is defined as the horizontal axis for convenience of explanation.

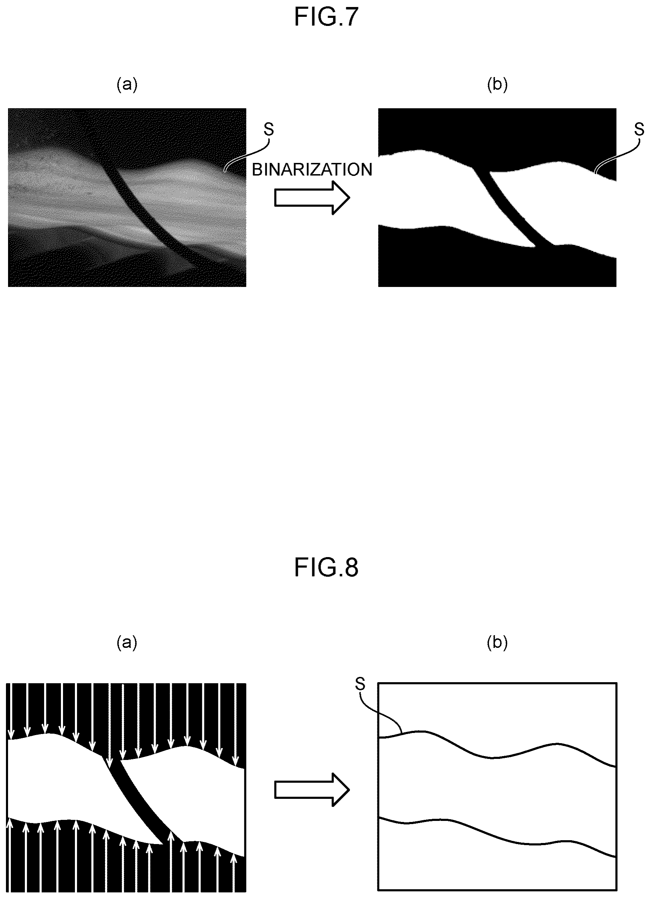

First, as illustrated in FIG. 7, only a sheet region of the steel sheet S is extracted by binarization (Step S1 in FIG. 6). An image before binarization is illustrated in (a) of FIG. 7, and an image after binarization is illustrated in (b) of FIG. 7.

At this time, there may be a case where a disturbance occurs, such as a local decrease in luminance on the sheet surface due to water on the sheet surface, droplets of cooling water, or the like, or shining due to thermal radiation light scattered from the steel sheet S caused by droplets splashed into a space above the sheet. Since these disturbances are often in a high frequency band and faint with respect to a pitch of the shape to be calculated, it is desirable to remove connected/isolated points by expansion/contraction processing, a median filter or the like (Step S2 in FIG. 6) on the sheet region extracted in a binarization step.

In addition, there is a case where a plurality of blobs (lumps recognized by connecting surrounding pixels when binarized) that will be candidates of the sheet region is generated after removing connection/isolated point. In this case, the sheet region may be determined by extracting a blob (Step S3 in FIG. 6) or determining the sheet region based on a size, a direction, and the like of the steel sheet S.

Subsequently, contour profiles of both edge portions are calculated from the sheet region of the steel sheet S obtained as described above (Step S4 in FIG. 6). Various methods can be considered as a method of calculating the contour profile of the edge portion. As an example, a method of extracting the contour of the edge portion by search is illustrated in FIG. 8. A state in which the contour of the edge portion is searched is illustrated in (a) of FIG. 8, and the contour of the edge portion extracted is illustrated in (b) of FIG. 8.

As illustrated in (a) of FIG. 8, the search may be performed from outside the sheet region toward the sheet region in the image, and coordinates reaching the sheet region may be recorded. Conversely, the search may be performed from inside the sheet region to outside the sheet region. In the present embodiment, the contour profiles of an upper edge portion and a lower edge portion are calculated as one-dimensional vectors by searching the contour in a vertical direction at each point in the horizontal axis on the image.

Here, since the image obtained in a capturing step is captured obliquely with respect to the conveying direction of the steel sheet S, the resolution is different between the wave height direction and the wave pitch direction. Therefore, the resolution of the contour profile on the image obtained is corrected separately in the wave height direction and the wave pitch direction (Step S5 in FIG. 6).

Specifically, in Step S5, a tilt of the optical axis of the camera 2 is first corrected by rotation so that the longitudinal direction of the steel sheet S coincides with the horizontal axis. Since the resolution in the wave height direction, i.e., vertical axis, is "rn (mm/pixel)" and the resolution in the wave pitch direction, i.e., horizontal axis, is "rp (mm/pixel)", the resolutions can be converted into the contour profile of the steel sheet S.

Furthermore, since a distance from the camera 2 is different between the edge portion on the front side and the edge portion on the back side, in reality the resolution changes. Therefore, the resolution may be calculated and corrected separately, depending on the distance from the camera 2, at the position of the edge portion on the front side and the position of the edge portion on the back side. In other words, the resolutions in the wave height direction and the wave pitch direction may be calculated from the positional relationship between the camera 2 and the steel sheet S, and may be converted into actual dimensions.

Still more, the contour profile of the steel sheet S may be calculated by performing coordinate transformation using an attitude parameter of the camera 2 and obtaining orthographic projection onto the plane β (see FIG. 2) without performing the above-described process on the contour profile of the edge portion obtained. As a result, strict geometric correction can be performed in the entire visual field of the camera 2.

Still more, since the wave pitch and the period of the sheet elongation of the steel sheet S are substantially determined, noise that does not contribute to the shape may be removed from the contour profile of the edge portion by applying a low-pass filter or a band-pass filter for removing frequency components other than the wave pitch and the period.

Subsequently, the edge shape index is calculated from the contour profile of the edge portion of the steel sheet S obtained as described above (Step S6 in FIG. 6). The edge shape index often involves a parameter called the steepness that is a ratio between the wave height and the wave pitch. However, one or more may be appropriately selected from the wave height, the wave pitch, the elongation amount, the elongation percentage, and the like and used as the index. Various methods of calculating the edge shape index of the steel sheet S are applicable, and representative methods (i) to (iii) are listed below.

(i) A maximum point and a minimum point are calculated, and a distance in the longitudinal direction of the image is defined as the wave height, and a distance in the lateral direction is defined as the wave pitch. The steepness is calculated as a ratio between the wave height and the wave pitch.
(ii) A sin curve is fitted to calculate the wave height and the wave pitch from an amplitude and a period. The steepness is calculated as the ratio between the wave height and the wave pitch.
(iii) The elongation amount and the elongation percentage of the sheet elongation are calculated from a contour length, and the steepness is directly calculated by the method disclosed in Non Patent Literature 2.

By using the edge shape index of the steel sheet S obtained in this manner, it is possible to perform parameter control and feedback control at the time of rolling, and further perform acceptance determination of the shape of a coiled sheet shape. Note that not only the index of the shape is calculated from the contour profile of the steel sheet S, but also the wave height, the wave period, the steepness, the elongation amount, the elongation percentage, and the like may be calculated from the contour profile on the image, for example, and then corrected using the resolution rn (mm/pixel) in the wave height direction and the resolution rp (mm/pixel) in the wave pitch direction.

EP 4 664 062 A1

Further, as a behavior during conveyance of the steel sheet S, there is a case where another curve is detected even when sheet elongation (particularly, elongation of the edge portion of the band-like object) does not occur. For example, there is a phenomenon in which the steel sheet S instantaneously rises and generates a big wave (referred to as waving), and a phenomenon in which the steel sheet S is continuously conveyed without any change in the form of the wave in the visual field (referred to as fixed wave). Since these phenomena are different from sheet elongation, it is preferable to exclude these phenomena from a detection result. Therefore, a method of distinguishing the sheet elongation from the waving and the fixed wave will be described below.

The waving is a phenomenon that occurs when the conveyance speed of the steel sheet S is accelerated during conveyance, and is a phenomenon that the sheet having no way to go bounces upward and generates a big wave when a speed on the downstream side becomes higher than a speed on the upstream side at a certain sheet point between the upstream side and on the downstream side. Since this phenomenon occurs even when the edge shape of the sheet is flat and sheet elongation does not occur, it is necessary to distinguish this phenomenon from the shape caused by sheet elongation.

Characteristics of the waving include that the wave pitch is very large, the wave height suddenly becomes very large, and the wave pitch and the wave height suddenly become large as compared with the preceding and succeeding waves. Therefore, in a method that directly calculates the wave pitch and the wave height, the waving, not sheet elongation, can be determined when the wave pitch and the wave height suddenly increase. Then, a process such as masking data in a period determined as the waving, or filling with preceding and subsequent data is performed. As a result, the waving can be excluded from the detection result of the sheet elongation, and an influence of the waving on a measurement result can be reduced.

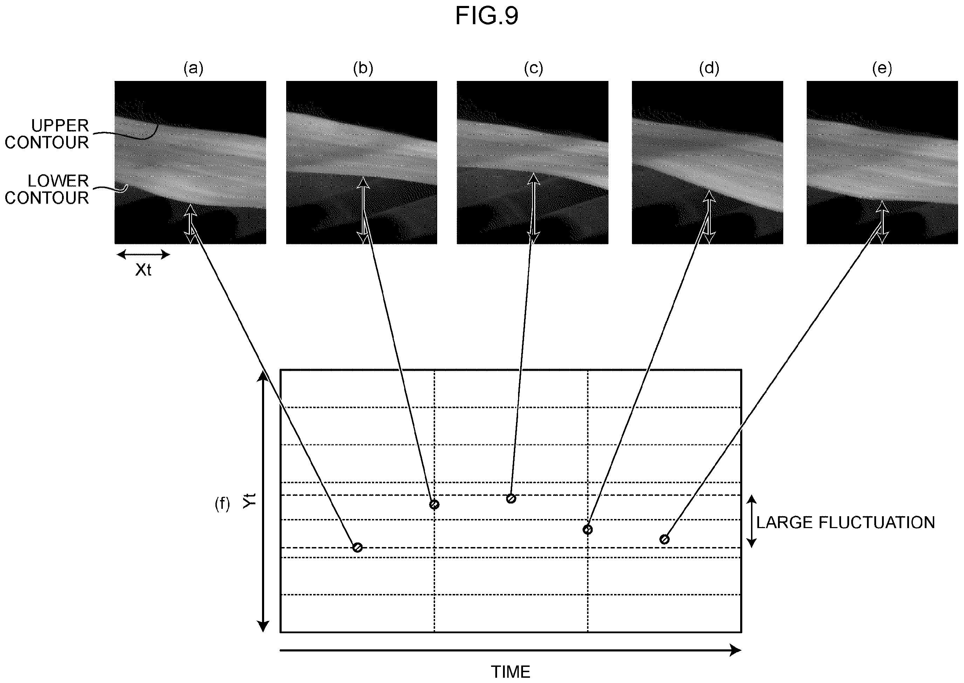

Still more, even when an index in which the wave height and the wave pitch are not directly calculated, such as a case where the sheet elongation amount is calculated from the contour of the steel sheet S, the waving can be distinguished using the characteristics of the waving. For example, without using the entire visual field in the image, as illustrated in FIG. 9, a contour position of one point in the longitudinal direction of the steel sheet S in the visual field may be monitored, and when fluctuation of the contour position is extremely large, it may be determined as the waving.

A method for determining the waving using the fluctuation of the contour position will be described with reference to FIG. 9. Imaging examples of the waving of the steel sheet S are illustrated in (a) to (e) of FIG. 9. In FIG. 9, (a), (b), (c), (d), and (e) are arranged in order of time. Specifically, the waving can be determined according to the following procedures (1) to (3).

(1) One position Xt in an image width direction is determined.
(2) A lower contour position Yt of each image is calculated with respect to the one position Xt in the image width direction determined in (1). The lower contour position Yt is a contour position on the lower side from the center in an image lateral direction.
(3) Fluctuation of the lower contour position Yt calculated is monitored, and a position with large fluctuation is detected.

A schematic diagram in which the lower contour positions Yt are plotted in chronological order is illustrated in (f) in a lower part of FIG. 9. The presence of waving can be determined using this schematic diagram. In addition, as a method for determining the waving, the number of maximum values and the number of minimum values in a certain section may be monitored with respect to transition of the lower contour position Yt, and the presence of the waving may be determined when the number of maximum values and the number of minimum values are suddenly decreased.

In the example in FIG. 9, the presence of the waving is determined using the lower contour position Yt, but the presence of the waving may be determined using an upper contour position. There is also a possibility that the waving occurs independently on both edges of the steel sheet S. Therefore, it is preferable to monitor both the upper contour position and the lower contour position to determine the presence of waving.

Next, a fixed wave determination method will be described. The fixed wave is a phenomenon in which the steel sheet S is continuously conveyed while the form of wave remains unchanged. In the visual field of the camera 2, the position and shape of the contour of the steel sheet S do not change for a certain period of time in the observation. This is a phenomenon in which the sheet speed in front of the conveyance line is steadily reduced, similarly to the waving, and an excess steel sheet S is bent upward, generating a constantly-curved contour. Similarly to the waving, the fixed wave occurs even when sheet elongation does not occur, and thus, it is necessary to distinguish the fixed wave from the shape caused by sheet elongation.

Since a steady contour (unchanging contour) literally occurs in a time direction in the fixed wave, it is possible to detect the fixed wave by comparing contour shapes before and after a certain time passes and calculating a change amount thereof. For example, a difference in absolute value is obtained between contour profiles, and when the sum or the sum of squares is less than a threshold, it is determined as the fixed wave. Then, a process such as masking data in a period determined as the fixed wave, or filling with preceding and subsequent data is performed. As a result, the fixed wave can be excluded from a sheet elongation detection result, and an influence of the fixed wave on the measurement result can be reduced.

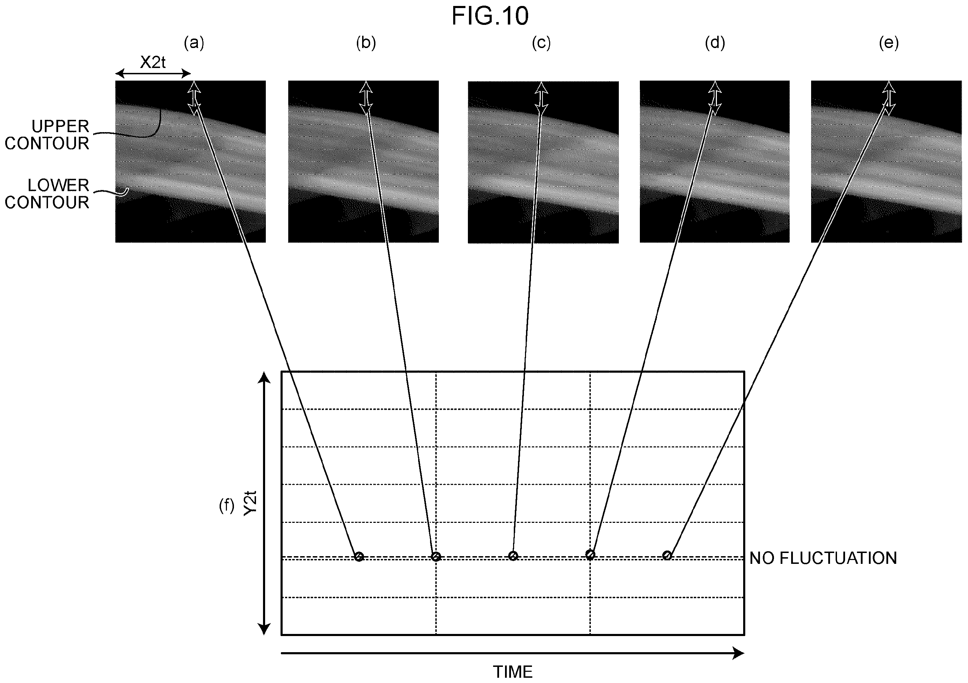

In addition, similarly to the waving, even when the entire visual field in the image is not used, for example, as illustrated in FIG. 10, the contour position of one point in the longitudinal direction of the steel sheet S in the visual field may be monitored, and it may be determined as the fixed wave when the contour position does not fluctuate extremely.

A method for determining the fixed wave using the fluctuation of the contour position will be described with reference to FIG. 10. Imaging examples of the fixed wave of the steel sheet S are illustrated in (a) to (e) of FIG. 10. In FIG. 10, (a), (b), (c), (d), and (e) are arranged in order of time. Specifically, the fixed wave can be determined according to the following procedures (1) to (3).

(1) One position $X2t$ in the image width direction is determined.
(2) An upper contour position $Y2t$ in each image is calculated with respect to the one position $X2t$ in the image width direction determined in (1). The upper contour position $Y2t$ is a contour position on the upper side from the center in the image lateral direction.
(3) Fluctuation of the upper contour position $Y2t$ calculated is monitored, and a portion where there is almost no fluctuation is detected.

A schematic diagram in which the upper contour positions $Y2t$ are plotted in chronological order is illustrated in (f) in a lower part of FIG. 10. The presence of the fixed wave can be determined using this schematic diagram. Still more, as a method of determining the fixed wave, a standard deviation in a certain section may be monitored for transition of the upper contour position $Y2t$, and a portion where the standard deviation falls below a threshold may be determined as the fixed wave. Furthermore, a difference between the maximum value and the minimum value in a certain section may be monitored, and a portion below the threshold may be determined as the fixed wave.

In the example in FIG. 10, the presence of the fixed wave is determined using the upper contour position $Y2t$, but the presence of the fixed wave may be determined using the lower contour position. Still more, the fixed wave may be generated independently on both edges. Therefore, it is preferable to monitor both the upper contour position and the lower contour position to determine the presence of the fixed wave.

On the other hand, even in a flat state without any wave generated in the shape of the steel sheet S, the contour shape before and after a certain period of time does not change. This state is not the fixed wave, and the shape of the steel sheet S and a sheet-passing state are good. The fixed wave is a type of sheet passing failure due to sheet clogging, and when a degree of clogging is severe, the fixed wave comes into contact with equipment, causing a problem. Therefore, it is preferable that the fixed wave can be automatically detected.

Thus, it is also possible to determine whether or not the fixed wave is generated by adding information on occurrence of sheet elongation to evaluation using the change amount of the contour shape. For example, even when the change amount of the contour shape is large, it is possible to use a method in which the fixed wave is not determined when the index of sheet elongation is less than or equal to the threshold, and the fixed wave is determined only when the index is more than or equal to the threshold. Still more, for making determination, a method of designing an evaluation function and determining the fixed wave based on a threshold value may be used, or correct answer data is prepared by visually determining the fixed wave and a determination device that determines the fixed wave using machine learning may be created.

In the binarization in Step S1, a brightness of the thermal radiation light varies depending on a temperature of the measurement target. Therefore, when the binarization is performed with a fixed value, there is a problem that a part of the background is detected as the sheet region when the steel sheet S is bright, and conversely, the background cannot be detected when the steel sheet S is dark.

For the above problem, it is desirable to perform luminance correction. Examples of a method of luminance correction include a method for multiplying the luminance of the entire image by a fixed value such that a representative value such as a maximum value, an average value, a median value, or a percentile of the luminance of the entire image becomes a target value. In addition, dark current correction may be performed before multiplication.

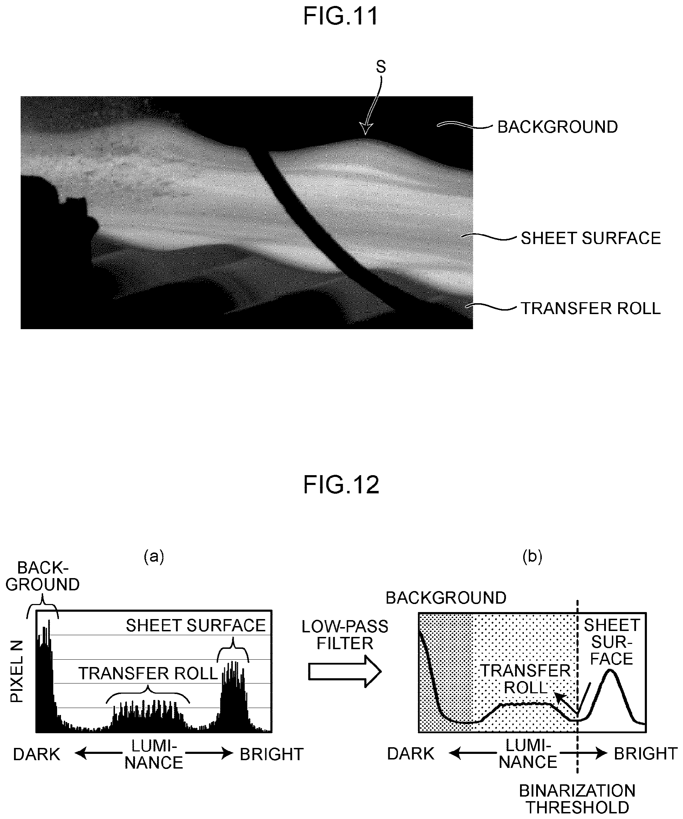

In addition, for example, as illustrated in FIG. 11, it may be difficult to distinguish a structure from the sheet surface when a structure such as a transfer roll or a table is irradiated with thermal radiation light emitted from the steel sheet S, and the structure is brightly imaged in an image. In this case, in the image, the sheet surface is bright because the sheet surface directly receives the thermal radiation light, but the structure is often darker than the sheet surface because the structure receives reflection of the thermal radiation light emitted from the sheet surface.

Therefore, a binarization threshold that can separate the structure and the sheet by performing the above-described luminance correction may be determined as a fixed value, but it is possible to more stably detect a valley portion by automatically detecting the valley portion from a shape of a histogram of the entire image. To detect the valley portion, for example as illustrated in FIG. 12, it is possible to stably calculate the minimum value by differential processing, search processing, or the like by applying a low-pass filter to a luminance histogram itself. An example of the luminance histogram is illustrated in (a) of FIG. 12, and (a) is a graph in which the luminance is plotted on the horizontal axis and the number of pixels N is plotted on the vertical axis. An example in which the low-pass filter is applied to a luminance direction of the luminance histogram is illustrated in (b) of FIG. 12. Note that, in the histogram, the valley portion includes two portions, which are a boundary between the sheet surface and the structure and a boundary between the structure and the background. Therefore, it is preferable to select the larger one of the two valley portions. A position separated by a dotted line in (b) of FIG. 12 corresponds to the binarization threshold.

Still more, in the present embodiment, an example of processing the image of the camera 2 by the image processing unit 3 to calculate the edge shape index of the steel sheet S has been described. However, a camera image may be simply presented to an operator as it is to perform feedback to the rolling control.

In addition, the edge shape index of the steel sheet S may be estimated from the image using a discriminator based on machine learning. Specifically, first, training data is created by associating the image of the steel sheet S obtained with the index of the edge shape measured visually or by some other method as a correct answer. Then, using the training data created and the machine learning method, the discriminator that receives an image as an input to output the edge shape index is generated. Using this discriminator, the edge shape index of the steel sheet S to be measured is calculated. In addition to the image, input data for the machine learning and discriminator may be a feature amount calculated from the image. Still more, the machine learning method is not limited, and a convolutional neural network or the like may be used as long as real-time processing is not required.

(Example of application to shape acceptance determination)

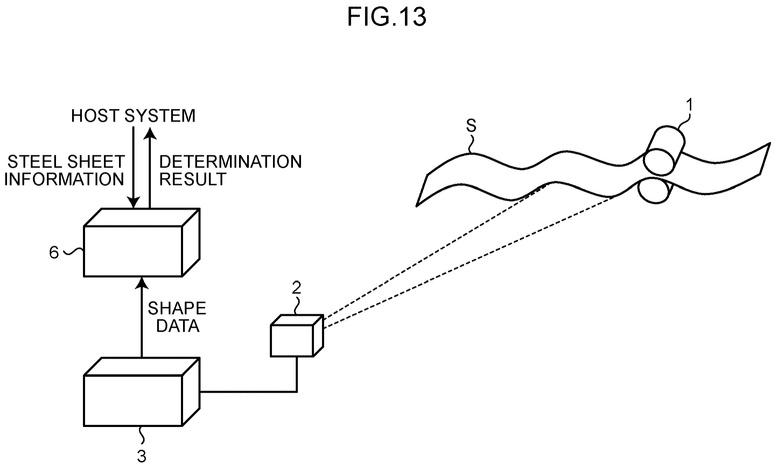

An example in which the band-like object shape measuring apparatus according to the embodiment is applied to shape acceptance determination will be described with reference to FIG. 13. The acceptance determination system in FIG. 13 includes the camera 2, the image processing unit 3, and an acceptance determination unit 6.

First, the image processing unit 3 calculates the edge shape index (shape data) of the steel sheet S from an image captured by the camera 2, and transmits the edge shape index to the acceptance determination unit 6. The acceptance determination unit 6 determines acceptance or rejection of the shape based on steel sheet information (e.g., sheet thickness, sheet width, steel type, and temperature) acquired from a host system and the edge shape index of the steel sheet S. An acceptance determination result is transmitted to the host system. Based on the acceptance determination result, the host system determines whether correction is needed, whether to cut defective shape portion, whether to perform rolling in the next process, and the like. As described above, by utilizing the edge shape index of the steel sheet S for an action in the next process, it is possible to suppress problems and contribute to improving product quality.

(Example of application to rolling feedback control)

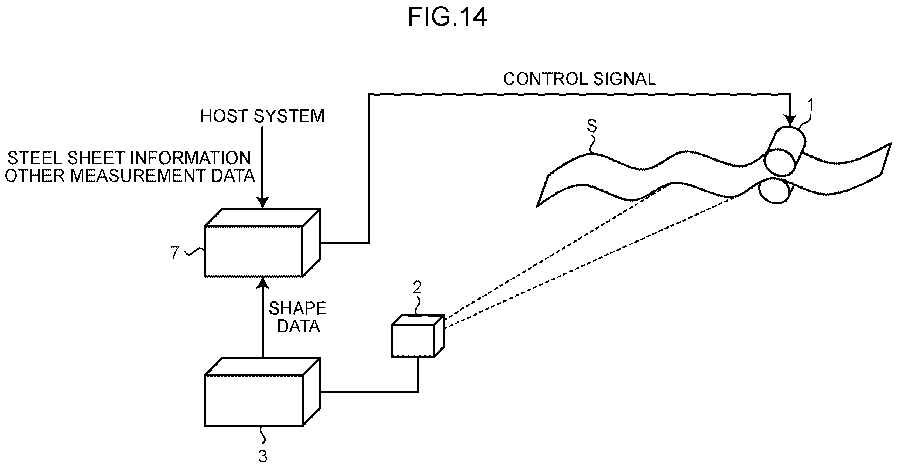

An example in which the band-like object shape measuring apparatus according to the embodiment is applied to rolling feedback control will be described with reference to FIG. 14. A rolling control system in FIG. 14 includes the camera 2, the image processing unit 3, and a rolling control unit 7.

First, the image processing unit 3 calculates the edge shape index of the steel sheet S from an image captured by the camera 2, and transmits the edge shape index to the rolling control unit 7. The rolling control unit 7 calculates a control parameter using the edge shape index based on the steel sheet information (e.g., sheet thickness, sheet width, steel type, and temperature) acquired from the host system, other measurement data such as a sheet passing position, and the edge shape index of the steel sheet S. The rolling control unit 7 transmits a control signal to the rolling roll 1 to perform the feedback control such as leveling. By performing the above feedback control, the shape of the product can be stabilized, and a shape defect itself can be reduced.

(Example of application to rolling control using machine learning)

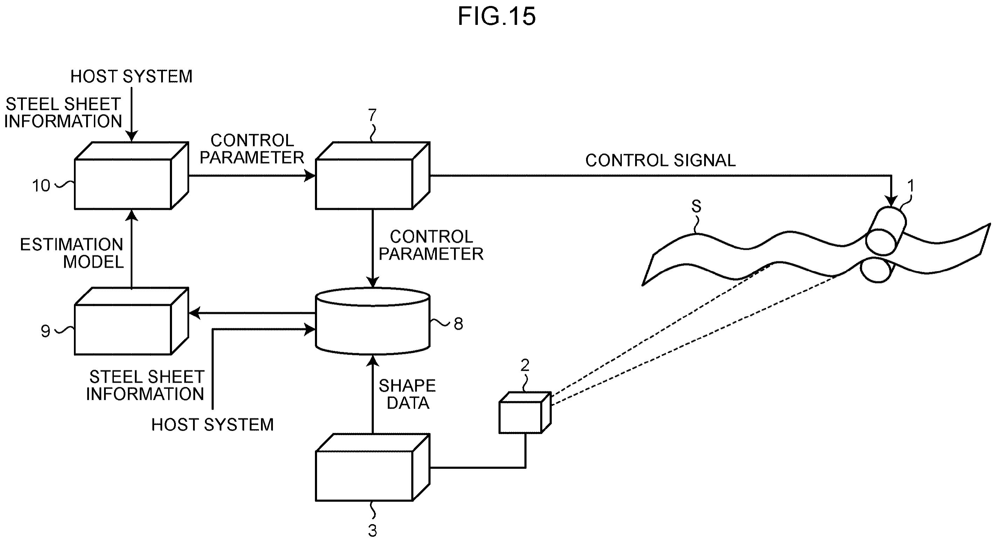

An example in which the band-like object shape measuring apparatus according to the embodiment is applied to the rolling control using machine learning will be described with reference to FIG. 15. A rolling control system in FIG. 15 includes the camera 2, the image processing unit 3, the rolling control unit 7, a data server 8, a machine learning unit 9, and a control parameter estimation unit 10.

First, the image processing unit 3 calculates the shape index of the steel sheet S from an image captured by the camera 2, and transmits the edge shape index to the data server 8. The data server 8 accumulates the edge shape index associated with steel sheet information (e.g., sheet thickness, sheet width, steel type, and temperature) acquired from the host system and a control parameter at the time of rolling.

Data accumulated is transmitted to the machine learning unit 9. In the machine learning unit 9, a model for estimating a control parameter for rolling while suppressing a shape defect is constructed by machine learning. An estimation model is transmitted to the control parameter estimation unit 10, and estimates the control parameter based on the steel sheet information acquired from the host system. The control parameter is transmitted to the rolling control unit 7.

The rolling control unit 7 performs preset control such as leveling by transmitting a control signal to the rolling roll 1. By performing the above preset control, the shape of the product can be stabilized, and a shape defect itself can be reduced.

Note that, in the present application example, the control parameter in the preset control has been described. However, machine learning may also be similarly applied to calculation of a control parameter of the feedback control. Still more, by combining the preset control and the feedback control, the shape quality of the product can be further improved.

Still more, in addition to the above application examples, the band-like object shape measuring apparatus according to the embodiment can be provided as a part of band-like object manufacturing equipment.

Still more, the band-like object shape measuring method according to the embodiment is also applicable to a band-like object shape control method. In this case, the shape of the band-like object is measured by the above-described band-like object shape measuring method, and the shape of the band-like object is controlled to have a desired shape based on the measurement result.

Still more, the band-like object shape measuring method according to the embodiment is also applicable to a band-like object manufacturing method. In this case, the shape of the band-like object is measured by the above-described band-like object shape measuring method, and the band-like object is manufactured based on the measurement result.

Still more, the band-like object shape measuring method according to the embodiment is also be applicable to a band-like object quality management method. In this case, the shape of the band-like object is measured by the above-described band-like object shape measuring method, and a quality of the band-like object is managed based on the measurement result.

The band-like object shape measuring method, the band-like object shape control method, the band-like object manufacturing method, the band-like object quality management method, the band-like object shape measuring apparatus, and the band-like object manufacturing equipment according to the embodiment described above have the following effects.

First, by passively imaging the thermal radiation light of the steel sheet S to be measured, imaging can be performed from a distant good installation environment without installing a light source or a sensor around the steel sheet S passing through, and the edge shape of the steel sheet S can be clearly captured.

Furthermore, by selecting an imaging element suitable for the temperature of the target object as the imaging element of the camera 2, the thermal radiation light can be efficiently received. For example, for a measurement target at about 900°C, sensitivity can be increased by using the near-infrared component of the Si imaging element. Thus, even for the steel sheet S conveyed at a high speed, a clear image without blurring can be captured by shortening the exposure time.

Still more, by performing imaging such that the angle $\theta$ formed by the plane $\alpha$, which is the reference plane of the surface of the band-like object (steel sheet S), and the optical axis of the camera 2 does not become 90 degrees, and also the angle $\phi$ formed by the orthographic projection of the optical axis of the camera 2 onto the plane $\alpha$ and the conveying direction p of the band-like object (steel sheet S) does not become 0 degrees, it is possible to clearly capture the contours of both edge portions of the steel sheet S. Thus, the edge shape index can be quantitatively calculated to clearly capture the sheet elongation. Furthermore, a higher effect can be obtained by imaging the band-like object (steel sheet S) from the width direction (i.e., direction in which the angle $\phi$ is close to 90 degrees). Alternatively, a higher effect can be obtained by imaging at a low angle (i.e., direction in which the angle $\theta$ is close to 0 degrees). It is obvious that a further higher effect can be gained by imaging from a direction in which the angle $\phi$ is close to 90 degrees and also a direction in which the angle $\theta$ is close to 0 degrees.

In the present invention, the steel sheet S on the exit side of finish rolling in the hot rolling step has been described. However, it is obvious that the present invention is also applicable to other high temperature rectangle-like steel materials such as steel plates and slabs. Still more, it is obvious that the present invention is applicable not only to band-like objects in a steel process but also to various band-like objects of different materials as long as thermal radiation light of the measurement target can be obtained. Furthermore, the present invention is preferably applied to the shape measurement of elongation in the edge portion of the band-like object, so as to gain a larger effect.

The band-like object shape measuring method, the band-like object shape control method, the band-like object manufacturing method, the band-like object quality management method, the band-like object shape measuring apparatus, and the band-like object manufacturing equipment according to the present invention have been specifically described above with reference to the embodiments and examples for carrying out the invention. However, the gist of the present invention is not limited to these descriptions, and is widely interpreted based on the description of the claims. It is obvious that various changes and modifications based on the descriptions are also included in the gist of the present invention.

Reference Signs List

1      ROLLING ROLL

2      CAMERA
3      IMAGE PROCESSING UNIT
6      ACCEPTANCE DETERMINATION UNIT
7      ROLLING CONTROL UNIT
8      DATA SERVER
9      MACHINE LEARNING UNIT
10     CONTROL PARAMETER ESTIMATION UNIT
S      STEEL SHEET

## Claims

1. A band-like object shape measuring method for measuring a shape of a band-like object, the band-like object shape measuring method comprising:

   a capturing step of capturing an image of thermal radiation light of the band-like object such that

   an angle $\theta$ formed by a plane $\alpha$ and an optical axis of a camera does not become 90 degrees, the plane $\alpha$ being a reference plane of a surface of the band-like object, and
   an angle $\phi$ formed by orthographic projection of the optical axis of the camera onto the plane $\alpha$ and a conveying direction p of the band-like object does not become 0 degrees; and

   an image processing step of calculating an index of a shape of an edge portion of the band-like object by calculating a contour profile of the band-like object from the image obtained.

2. The band-like object shape measuring method according to claim 1, wherein
   the image processing step includes:

   extracting a region of the band-like object from the image obtained; and
   calculating the contour profile of the band-like object by calculating a position of the edge portion in the region extracted.

3. The band-like object shape measuring method according to claim 1 or 2, wherein the image processing step includes calculating, as the index, any one or more of a steepness, a wave height, a wave pitch, an elongation amount, and an elongation percentage of the edge portion of the band-like object from the contour profile of the band-like object obtained.

4. The band-like object shape measuring method according to any one of claims 1 to 3, wherein the image processing step includes calculating a resolution in a wave height direction and a wave pitch direction from a positional relationship between the camera and the band-like object, and converting the resolution into an actual dimension.

5. A method for controlling a shape of a band-like object, the method comprising:

   measuring the shape of the band-like object by the band-like object shape measuring method according to any one of claims 1 to 4; and
   controlling the shape of the band-like object, based on a result of the measuring, to have a desired shape.

6. A method for manufacturing a band-like object, the method comprising:

   measuring a shape of the band-like object by the band-like object shape measuring method according to any one of claims 1 to 4; and
   manufacturing the band-like object based on a result of the measuring.

7. A method for managing a quality of a band-like object, the method comprising:

   measuring a shape of the band-like object by the band-like object shape measuring method according to any one of claims 1 to 4; and

managing the quality of the band-like object based on a result of the measuring.

8. A band-like object shape measuring apparatus for measuring a shape of a band-like object, the band-like object shape measuring apparatus comprising:

image capturing unit configured to capture an image of thermal radiation light of the band-like object such that

an angle $\theta$ formed by a plane $\alpha$ and an optical axis of a camera does not become 90 degrees, the plane $\alpha$ being a reference plane of a surface of the band-like object, and

an angle $\phi$ formed by orthographic projection of the optical axis of the camera onto the plane $\alpha$ and a conveying direction p of the band-like object does not become 0 degrees; and

image processing unit configured to calculate an index of a shape of an edge portion of the band-like object by calculating a contour profile of the band-like object from the image obtained.

9. Band-like object manufacturing equipment comprising the band-like object shape measuring apparatus according to claim 8.

FIG.1

# FIG.2

(a)

NORMAL LINE n OF
CONVEYANCE TABLE

$\phi$

PLANE $\beta$

CONVEYING DIRECTION p

PLANE $\alpha$

PLANE $\gamma$

S

0

$\theta$

OPTICAL AXIS

PLANE $\delta$

2

(b)

PLANE $\beta$

CONVEYING DIRECTION p

0

$\phi$

PLANE $\alpha$
(REFERENCE
PLANE OF
SURFACE)

PLANE $\gamma$

S

PLANE $\delta$

DIRECTION
$\delta_n$

OPTICAL
AXIS

2

(c)

NORMAL LINE n OF
CONVEYANCE TABLE

PLANE $\delta$

2

REFERENCE
PLANE OF
SURFACE

PLANE $\beta$

PLANE $\gamma$

S

$\theta$

0

CONVEYING DIRECTION p

PLANE $\alpha$

# FIG.3

(a)

(b)

# FIG.4

(a)

(b)

# FIG.5

(a)

(b)

# FIG.6

START

EXTRACT SHEET REGION BY BINARIZATION — S1

REMOVE CONNECTED/ISOLATED POINTS BY EXPANSION/CONTRACTION PROCESSING — S2

EXTRACT SHEET REGION BLOB — S3

CALCULATE CONTOUR PROFILES OF BOTH EDGE PORTIONS — S4

CORRECT RESOLUTION OF EACH CONTOUR PROFILE — S5

CALCULATE INDEX OF SHAPE OF EDGE PORTION — S6

END

# FIG.7

(a)

(b)

S

BINARIZATION

S

# FIG.8

(a)

(b)

S

# FIG.9

EP 4 664 062 A1

FIG.10

# FIG.11

- BACKGROUND
- SHEET SURFACE
- TRANSFER ROLL

# FIG.12

(a)

(b)

FIG.13

# FIG.14

CONTROL SIGNAL

HOST SYSTEM

STEEL SHEET INFORMATION
OTHER MEASUREMENT DATA

S

1

7

SHAPE
DATA

2

3

# FIG.15

EP 4 664 062 A1

## INTERNATIONAL SEARCH REPORT

| International application No. |
| --- |
| **PCT/JP2023/046079** |

| A. | CLASSIFICATION OF SUBJECT MATTER |
| --- | --- |

*G01B 11/24*(2006.01)i
FI:  G01B11/24 K

According to International Patent Classification (IPC) or to both national classification and IPC

| B. | FIELDS SEARCHED |
| --- | --- |

Minimum documentation searched (classification system followed by classification symbols)

G01B11/00-11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2018/168700 A1 (JFE STEEL CORPORATION) 20 September 2018 (2018-09-20)<br>entire text, all drawings | 1-9 |
| A | JP 2019-181562 A (JFE STEEL CORPORATION) 24 October 2019 (2019-10-24)<br>entire text, all drawings | 1-9 |
| A | JP 2000-357228 A (SUMITOMO METAL INDUSTRIES, LTD.) 26 December 2000<br>(2000-12-26)<br>entire text, all drawings | 1-9 |
| A | JP 10-318719 A (MITSUBISHI HEAVY INDUSTRIES, LTD.) 04 December 1998<br>(1998-12-04)<br>entire text, all drawings | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 February 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/046079**

| Patent document cited in search report | | | Publication date (day/month/year) | Patent family member(s) | | | Publication date (day/month/year) |
|---|---|---|---|---|---|---|---|
| WO | 2018/168700 | A1 | 20 September 2018 | US 2020/0082550 A1 whole document<br>EP 3581880 A1<br>CN 110382999 A<br>KR 10-2019-0116403 A<br>TW 201837423 A | | | |
| JP | 2019-181562 | A | 24 October 2019 | (Family: none) | | | |
| JP | 2000-357228 | A | 26 December 2000 | (Family: none) | | | |
| JP | 10-318719 | A | 04 December 1998 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56124006 A
- JP 55040924 A
- JP 58011708 A
- JP 61040503 A

- JP 2008058036 A
- JP 2011099821 A
- JP 2016065863 A

**Non-patent literature cited in the description**

- Development of shape meter employing LED dot pattern projection method for hot strip finishing mill. *The Iron and Steel Institute of Japan*, 2019, vol. 105 (1), 20-29

- **KANESHIGE**. Thermal measurement with radiation thermometer. *Japan Society of Polymer Processing*, 2020, vol. 32 (4), 121-124